# EUROPEAN PATENT APPLICATION

(11) **EP 2 759 235 A1**
(43) Date of publication of application: **30.07.2014**
(21) Application number: 13152705.3
(22) Date of filing: 25.01.2013
(51) Int. Cl.: A47J 31/40

(54) **Bag-in-box connector for use in vehicle for beverage preparation**

(71) Applicant: Friesland Brands B.V., 3818 LE Amersfoort (NL)
(72) Inventor: Bongers, Cornelis Margaretha Theodorus Maria, 5708ZP Helmond (NL)
(74) Representative: Nederlandsch Octrooibureau

(57) **Abstract**

Bag-in-box connector assembly for use in a beverage preparation assembly. A piercing connector (10) is provided for making a fluid communication between a main ingredient supply line connector (11) and a main beverage ingredient package (6). A rotating holder (12) is present for the piercing connector (10), rotating around a central axis (13). The rotating holder (12) is moveable along a longitudinal direction of the central axis (13) between a first position allowing rotation of the rotating holder (12) and a second position in which the fluid communication to the main beverage ingredient package (6) is established.

## Description

### Field of the invention

The present invention relates to a bag-in box connector assembly for use in a beverage preparation assembly. In a further aspect, the present invention relates to a vehicle comprising a frame body for accommodating a beverage preparation assembly and a bag-in-box connector assembly.

### Prior art

International patent publication WO2012/134296 discloses a sales outlet for vending beverages, and a method for monitoring a supply chain. In one embodiment, the sales outlet is part of a mobile vehicle, such as a small truck, a motor or scooter.

### Summary of the invention

The present invention seeks to provide an efficient solution to allowing the use of multiple main beverage ingredient packages in a beverage preparation assembly.

According to the present invention, a bag-in-box connector assembly for use in a beverage preparation assembly, comprising a piercing connector for making a fluid communication between a main ingredient supply line connector and a main beverage ingredient package, a rotating holder for the piercing connector, rotating around a central axis, wherein the rotating holder is moveable along a longitudinal direction of the central axis between a first position allowing rotation of the rotating holder and a second position in which the fluid communication to the main beverage ingredient package is established. The main beverage ingredient package (or bag-in-box container) can thus be easily pierced by the piercing connector using a single direction movement. Changing from one package to another is accomplished using a simple rotating movement.

In a further embodiment, the bag-in-box connector assembly further comprises a base plate and a bottom bearing element positioned on the base plate for attachment of the central axis of the rotating holder. The base plate may be provided with guiding slits for the piercing connector. The base plate provides the main structure for the bag-in-box connector to which other (structural or functional) parts can be attached.

The bag-in-box connector further comprises a bottom plate in a further embodiment, which is provided with a plurality of apertures for accommodating connector elements associated with a plurality of main beverage ingredient packages positioned next to each other (e.g. four Bag-In-Box packages in a quadrant configuration).

A stop element is provided in a further embodiment at a fixed rotational position with respect to the central axis, preventing rotating holder to rotate over more than 360°. Main effect is that a possible twisting of a main beverage ingredient supply line around connector assembly is prevented.

In a further embodiment, a wall plate is positioned co-axial to the central axis. A closing plate may be attached to a top of the wall plate, and is e.g. made of transparent material. A space is thus formed above the connector elements of the main beverage ingredient packages, which can be visually inspected. Furthermore, additional (thermal) insulation material may be provided on top of the closing plate, to further enhance the insulating properties of the entire frame body of the vehicle.

In a further embodiment, the closing plate is provided with an aperture for accommodating a handle bearing, allowing motion of the rotating holder along the central axis.

The stop element is attached to the closing plate in a further embodiment (facing the bottom plate, or to the wall plate. This provides sufficient structural rigidity to ensure reliable operation of the stop element over the entire life span of the bag-in-box connector.

The bag-in-box connector assembly may further comprise an actuating handle attached to the rotating holder. This ensures even further that there is no direct contact from the operator with the main beverage ingredient.

In an even further embodiment, the rotating holder and the central axis are provided with an assembly having a single rotation direction. E.g. a bottom bearing and/or a handle bearing is provided with single direction rotation only (e.g. a ratchet bearing, etc.). This ensures that subsequent bag-in-box packages are pierced in a fixed order, and that an operator cannot go 'back' to an empty bag-in-box package.

The form and structural relationship of the components of the bag-in-box connector as described above, also allows that all components can be installed from bottom to top in the vehicle, and can be taken out in reverse order for ease of cleaning, maintenance and or repair. Furthermore, the individual components are easy to manufacture, or are even available as off the shelf components.

In a further aspect, the present invention relates to a vehicle comprising a frame body for accommodating a beverage preparation assembly and a bag-in-box connector assembly according to any one of the embodiments described above. The bag-in-box connector assembly is positioned inside the frame body, which accommodates a plurality of main beverage ingredient packages in operation. The frame body comprises a closable lid arranged to be closeable in the second position of the rotating holder only, i.e. when a bag-in-box container in the frame body is properly pierced.

### Short description of drawings

The present invention will be discussed in more detail below, using a number of exemplary embodiments, with reference to the attached drawings, in which
Fig. 1 shows a schematic view of major components of a beverage preparation assembly wherein the present invention embodiments of a bag-in-box connector assembly can be used;
Fig. 2 shows cross sectional view of a vehicle provided with a beverage preparation assembly and an embodiment of the bag-in-box connector assembly of the present invention;
Fig. 2a shows a partial cross section as indicated by the circle in Fig. 2, detailing elements of an embodiment of the bag-in-box connector according to the present invention;
Fig. 3 shows a three dimensional view with a partial cross section of an embodiment of the bag-in-box connector assembly of the present invention;
Fig. 4a shows a three dimensional view with a cross section from a further embodiment of the bag-in-box connector according to the present invention; and
Fig. 4b shows a bottom view of a closing plate as present in the embodiment of Fig. 4a.

### Detailed description of exemplary embodiments

The present invention relates to a component which can advantageously be used in a vehicle comprising a beverage preparation assembly for the serving of beverages in e.g. cups, wherein the beverages are dairy based beverages. The vehicle 1 will in operation carry a plurality of main beverage ingredient packages 6, e.g. in the form of bag-in-box containers filled with a dairy product such as milk. The operator needs to be able to provide the dairy product with certain guarantees for freshness and hygiene. The present invention provides a bag-in-box connector assembly 23 to provide such a capacity, making sure that the operator or other persons never need to be in direct contact with the main beverage ingredient packages 6 during 'street' use of the vehicle 1 with the beverage preparation assembly 2. Only in a distribution facility preparing the vehicles for actual operation (e.g. at the start of the day) the main beverage ingredient packages 6 are handled by personnel. This personnel can be properly trained and checked to ensure hygienic handling of all beverage ingredient products.

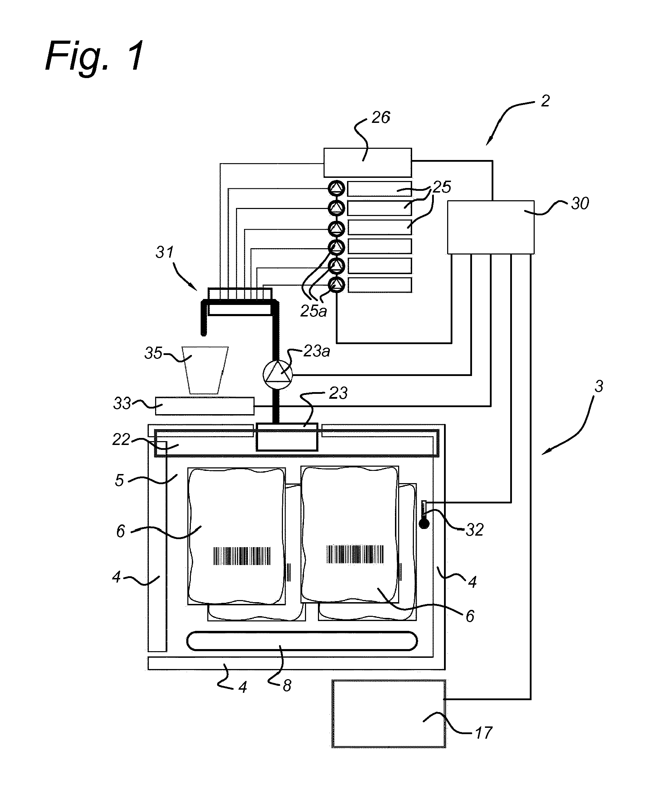

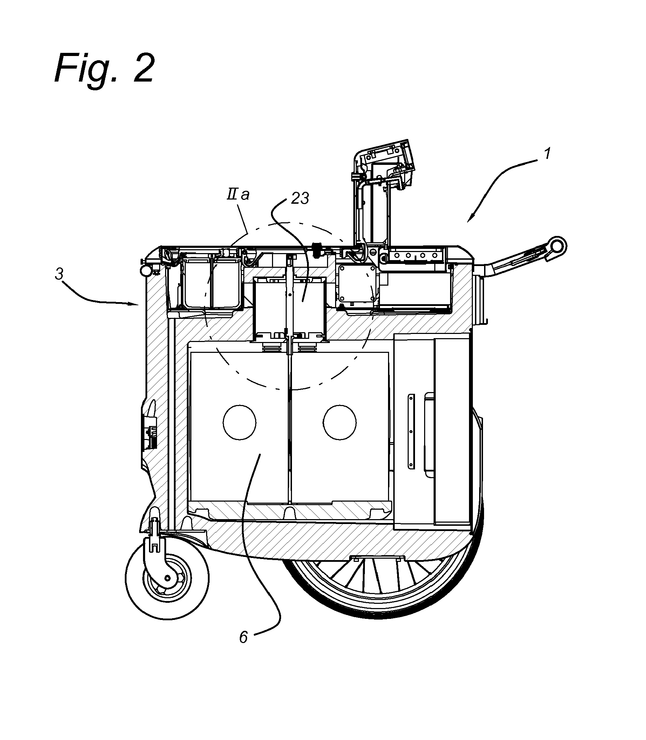

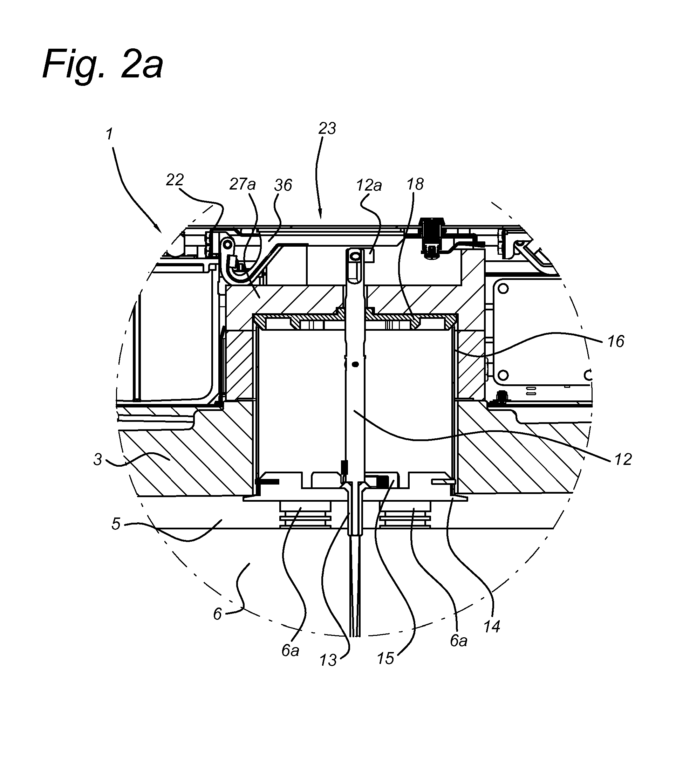

Fig. 1 shows a schematic view of major components of an embodiment of a beverage preparation assembly 2 according to the present invention, comprising a beverage preparation assembly 2 for local beverage preparation, e.g. using a small vehicle 1 (see also Fig. 2-4). The vehicle 1 comprising a frame body 3, the frame body 3 having a plurality of walls 4 providing structural strength to the vehicle 1 and forming a main internal space 5 for accommodating at least one main beverage ingredient package 6. The plurality of walls 4 comprise thermally insulating material, in order to keep the contents of the main beverage ingredients 6 in the main internal space 5 cool during a long period.

In the schematic view as shown, the beverage preparation assembly 2 comprises a cooling element 8 disposed in the internal space 5 for cooling the internal space 5 and its contents, i.e. the at least one main beverage ingredient package 6, during actual operation. In an embodiment, the cooling element 8 comprises a cooling liquid, known as such, or even blocks of ice, and passively cools the internal space 5. In another embodiment, the cooling element 8 may be an active component using e.g. electric power for actively cooling the internal space 5.

A first connection unit 23 is provided in the frame body 3, e.g. on the top side thereof, and is connected to the at least one main beverage ingredient package 6. The at least one main beverage ingredient package 6 may comprise a bag containing a main beverage ingredient and a cassette holding the bag ('bag-in-box'). The first connection unit 23 may therefore be referred to as a "bag-in-box" connector (BIB). Typically, the at least one main beverage ingredient package 6 stores a dairy product such as milk in liquid form, but other liquid ingredients are conceivable. Also other types of containers, cans or even tanks may be used as the main beverage ingredient package 6 in the beverage preparation assembly 2 of the present invention.

The beverage preparation assembly 2 is further provided with a pump 23a disposed between the first connection unit 23 and a mixing unit 31, the pump 23a being arranged for pumping ingredients from the at least one main beverage ingredient package 6 to the mixing unit 31, e.g. implemented as a peristaltic pump. The advantage is that in such a type of pump, the hose used is easily replaceable.

Furthermore, additional beverage ingredient containers 25 are provided and connected the mixing unit 31 via associated pumps 25a disposed between said containers 25 and mixing unit 31. In typical embodiments the additional beverage ingredient containers 25 comprise main ingredient additives such as sweeteners, flavours, colours, structuring agents, viscosity agents and the like.

The beverage preparation assembly 2 is further provided with a pressurized air source 26 connected to the mixing unit 31. The pressurized air source 26 may be a pre-pressurized canister, or a regular air pump.

The mixing unit 31 comprises specially arranged apertures for injecting air (in the form of jets or bubbles) into a beverage being prepared in the mixing unit 31 for serving in a cup 35.

The beverage preparation assembly 2 is also provided with sensor elements 32, such as a thermometer 32 disposed in the internal space 5, and a load cell 33 disposed external to the internal space 5. The load cell 33 is positioned in the frame body 3 such that the weight (or weight increase) of the cup 35 can be monitored during operation

A control unit 30 is further provided as part of the beverage preparation assembly 2 and is connected to control the pump 23a of the main beverage ingredient, the one or more pumps 25a associated with the additional beverage ingredient containers 25, and the pressurized air source 26. Furthermore, the control unit 31 is connected to the sensor elements 32 and load cell 33.

The pump 23a and one or more pumps 25 a may be any type of pump suitable for pumping the associated fluid or liquid, and e.g. comprise an electrically driven pump. Alternatively, the liquid or fluid in the main beverage ingredient package 6 and additional beverage ingredient containers 25 are pressurized (e.g. using pumps) and the amount delivered to the mixing unit is controlled using appropriate and associated valves.

In actual operation, the beverage preparation assembly 2 is part of a vehicle 1 which is operated by an operator. Customers can order a cup 35 holding a customer specific beverage such as a cold, whipped, milk-based beverage having a specific viscosity and flavour. The cup 35 rests on the load cell 33 next to the mixing unit 31 and below an outlet of the mixing unit 31. Based on customer specifications, the beverage comprises a certain mixture of main and additional ingredients from the at least one main beverage ingredient package 6 and additional beverage ingredient containers 25, and air bubbles or foam injected by the pressurized air source 26. The control unit 30 is responsible for the optimum beverage mixing and delivery by controlling the one or more pumps 23a, 25a based on predetermined parameters and measured signals from the sensor elements 32 and load cell 33. For example, the load cell 33 delivers a weight increase signal to the control unit 30 such that the amount of beverage in the cup 35 can be determined. The control unit 30 further controls the amount of additional ingredients to be mixed and the amount of air to be injected into the beverage.

In an advantageous embodiment, the beverage preparation assembly 2 is further provided with a battery pack 17 which is disposed on or in the frame body 3 external to the internal space 5. The battery pack 17 is arranged for powering one or more electrical components of the beverage preparation assembly 2, e.g. the control unit 30, pumps 23a, 25a and sensor elements 32.

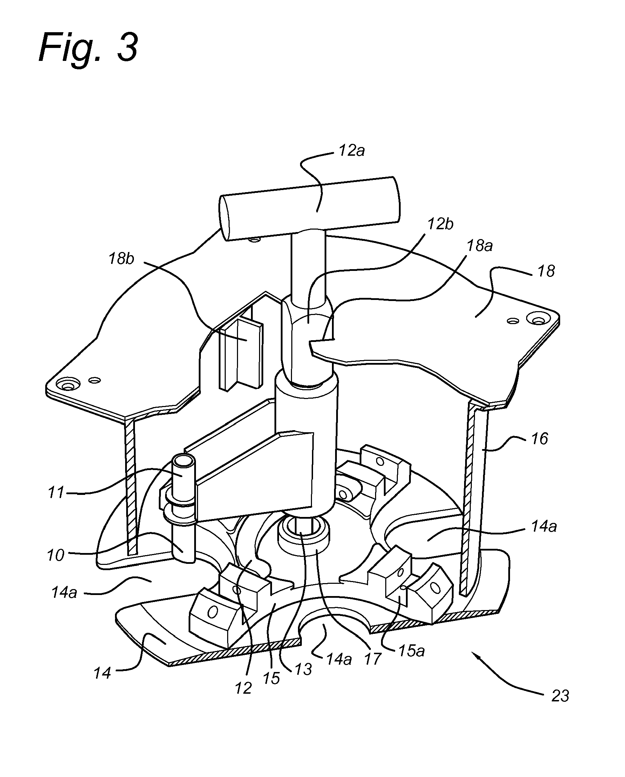

In Fig. 2, a partial cross sectional view is shown of a vehicle 1 comprising a beverage preparation assembly 2, and a first connection unit or bag-in-box connector assembly 23 according to a present invention embodiment. The bag-in-box connector assembly 23 is positioned inside a frame body 3 of the vehicle, in a space above the main internal space 5 where in operation a plurality of main beverage ingredient packages 6 are positioned. The space is closed off at the top side by a closeable lid element 22, or a specific further closeable lid 36 associated with the bag-in-box connector assembly 23 only (as shown in the cross sectional view of Fig. 2, where the further closeable lid 36 is attached to the frame body 3 using a hinge). The dimensions of the space, closeable lid 22, 36, and specific elements of the bag-in-box connector assembly 23 are such, that the closeable lid 22, 36 is closeable in a second position of a rotating holder 12 only, as shown in Fig. 2 (see also the description of Fig. 3 below), i.e. only when a bag-in-box container 6 in the frame body 3 is properly pierced.

Fig. 3 shows a three dimensional view with a partial sectional view of a bag-in-box connector assembly 23 according to an embodiment of the present invention.

The bag-in-box connector assembly 23 comprises a piercing connector 10 for making a fluid communication between a main ingredient supply line connector 11 and a main beverage ingredient package 6. The main ingredient supply line connector 11 is an interface to a main beverage ingredient supply line 20 connected to the mixing unit 31 (see Fig. 1). Furthermore, a rotating holder 12 for the piercing connector 10 is provided, rotating around a central axis 13. In general, the central axis 13 is substantially vertical in the vehicle 1 as shown and described with reference to Fig. 2.

The rotating holder 12 is moveable along a longitudinal direction of the central axis 13 between a first position allowing rotation of the rotating holder 12 and a second position in which the fluid communication to the main beverage ingredient package 6 is established. E.g., the rotating holder 12 can be made with a bore shifting over the central axis 13. This allows the main beverage ingredient package 6 (bag-in-box container) to be pierced by the piercing connector 10 when moving the rotating holder 12 to the second position. In the cross sectional view of Fig. 2, the rotating holder 12 is in the second position, allowing closing of the further closeable lid 36, whereas in the view of Fig. 3, the rotating holder 12 is in the first position.

The bag-in-box connector assembly further comprising a base plate 15 and a bottom bearing element 17 positioned on the base plate 15 for attachment of the central axis 13 of the rotating holder 12. The base plate 15 may be attached directly to a frame body 3 of the vehicle (see Fig. 2), and provides the main support for the central axis 13 and the rotating holder 12.

The base plate 15 may be provided with guiding slits 15a for the (end of the) piercing connector 10, ensuring safe and reliable operation of the bag-in-box connector assembly 23.

Alternatively, the bag-in-box connector assembly 23 is provided with a self-containing housing. E.g., the bag-in-box connector assembly further comprises a bottom plate 14 provided with a plurality of apertures 14a for accommodating connector elements 6a (see Fig. 2) associated with a plurality of main beverage ingredient packages 6 (e.g. four) positioned next to each other in the frame body 3 of the vehicle.

In an advantageous embodiment, the bag-in-box connector assembly further comprises a stop element 18b at a fixed rotational position with respect to the central axis 13, preventing the rotating holder 12 to rotate over more than 360°. This will effectively prevent twisting of the main beverage ingredient supply line 20 inside the bag-in-box connector assembly 23.

The housing may further comprising a wall plate 16 positioned co-axial to the central axis 13, e.g. a cylindrical wall plate. This wall plate 16, together with the bottom plate 14 and/or base plate 15 provides an internal spacing of the bag-in-box connector assembly 23 allowing reliable operation and inspection of the components of the bag-in-box connector assembly 23.

In a further embodiment, the bag-in-box connector assembly further comprises a closing plate 18 attached to a top of the wall plate 16. Advantageously, this closing plate 18 is of a transparent material, allowing visual inspection of the bag-in-box connector assembly 23 from above (i.e. from outside of the frame body 3 of the vehicle 1. Furthermore, additional (thermal) insulation material 27a may be provided on top of the closing plate 18, to ensure proper insulation of the main beverage ingredient packages 6 inside the vehicle 1.

The closing plate 18 is provided with an aperture 18a for accommodating a handle bearing 12b. This can provide a secondary bearing for the combination of central axis 13 and rotating holder 12, adding to stability and reliability of the construction of the bag-in-box connector assembly 23.

The stop element 18b can be attached to the closing plate 18, facing the bottom plate 14, as shown in the embodiment of Fig. 3. Alternatively, the stop element is attached to the wall plate 16.

In order to be able to properly operate the bag-in-box connector assembly 23 an actuating handle 12a is provided which is attached to the rotating holder 12. This allows easy handling and ensures there is no direct contact of the operator with the main beverage ingredient.

In an even further embodiment, the rotating holder 12 and the central axis 13 are provided with an assembly having a single rotation direction. This may be implemented in many variants, e.g. using a specific ratchet type of bearing integrated with the rotating holder 12 and the central axis 13. Also, this provision can be implemented in the bottom bearing element 17, or in the handle bearing 12b.

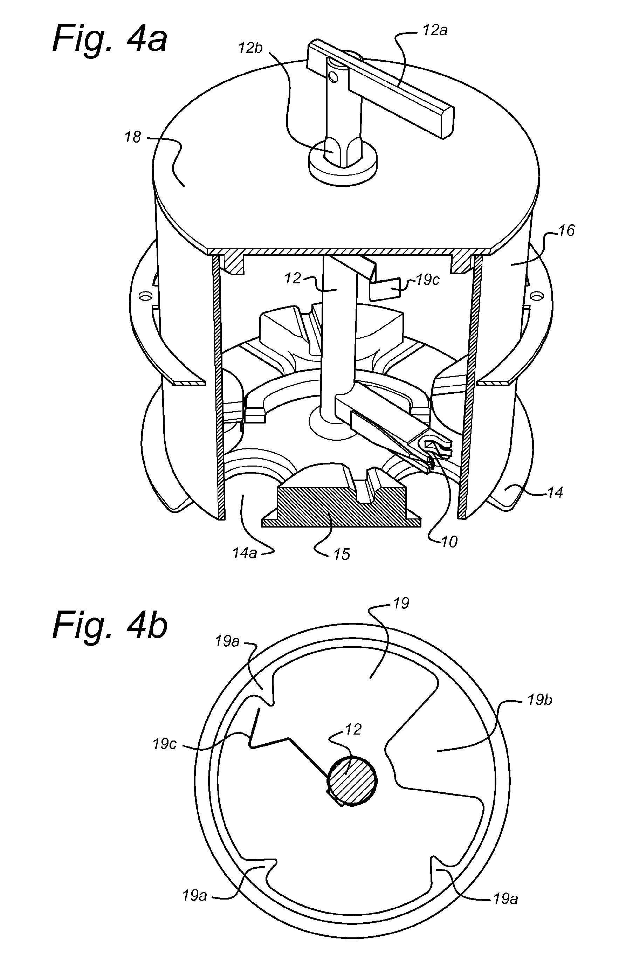

In Fig. 4a and 4b a further embodiment of the bag-in-box connector assembly 23 is shown, wherein the functionality of one way rotation and maximum of 360° rotation of the handle 12 (and associated with that the controlled use of the main beverage ingredient packages 6 in the beverage preparation assembly 2) is implemented in a different manner. Fig. 4a shows a three dimensional and partly cross sectional view of this embodiment, and Fig. 4b shows a cross sectional view of the bag-in-box connector assembly 23, showing the underside of the closing plate 18.

The handle 12 and piercing connector 10 are fixedly attached to each other and move as one entity, and are able to move up and down over the central axis 13 via the handle bearing 12b as in the other embodiment described above. Furthermore the handle 12 is provided with a leaf spring 19c, which co-operates with a formed rim 19 on the bottom of closing plate 18 (see specifically the bottom view of Fig. 4b). The bottom plate 14 and/or base plate 15 are formed with a maximum height in the direction of central axis 13, and the leaf spring 19c is positioned along the length of the handle 12 in the direction of the central axis, such that when changing to the next bag-in-box container 6, the leaf spring 19c is falling within the rim 19 of the closing plate 18. The rim 19 is provided with first inward facing protrusions 19a, and a second inward facing protrusion 19b. The first inward facing protrusion 19a together with the shape of the leaf spring 19c, allows the leaf spring 19c to pass the first protrusion 19a in one direction only: once passed, the handle 12 cannot be rotated backward any more. The shape of the second inward facing protrusion 19b (reaching further towards the center of central axis 13) effectively blocks further movement of the leaf spring 19c, and thus effectively blocks rotation of the handle 12 over more than 360°.

The structure as discussed above provides the additional benefit that all elements of the bag-in-box connector assembly 23 can be installed from the bottom part to the top part very easily in the space provided in the frame body 3 of the vehicle. Also, the elements can be taken out in reverse order, providing ease of cleaning, maintenance and/or repair. Also the elements themselves are easy to manufacture, using well known techniques such as plastic molding.

In an even further embodiment, the bag-in-box connector assembly 23 can be assembled in the frame body 3 of the vehicle without one or more of the housing components (bottom plate 14, wall plate 16, closing plate 18), but with direct attachment to the frame body 3.

The present invention embodiments have been described above with reference to a number of exemplary embodiments as shown in the drawings. Modifications and alternative implementations of some parts or elements are possible, and are included in the scope of protection as defined in the appended claims.

## Claims

1. Bag-in-box connector assembly for use in a beverage preparation assembly, comprising
a piercing connector (10) for making a fluid communication between a main ingredient supply line connector (11) and a main beverage ingredient package (6);
a rotating holder (12) for the piercing connector (10), rotating around a central axis (13);
wherein the rotating holder (12) is moveable along a longitudinal direction of the central axis (13) between a first position allowing rotation of the rotating holder (12) and a second position in which the fluid communication to the main beverage ingredient package (6) is established.

2. Bag-in-box connector assembly according to claim 1, further comprising a base plate (15) and a bottom bearing element (17) positioned on the base plate (15) for attachment of the central axis (13) of the rotating holder (12).

3. Bag-in-box connector assembly according to claim 2, wherein the base plate (15) provided with guiding slits (15a) for the piercing connector (10).

4. Bag-in-box connector assembly according to any one of claims 1-3, further comprising a bottom plate (14) provided with a plurality of apertures (14a) for accommodating connector elements associated with a plurality of main beverage ingredient packages (6) positioned next to each other.

5. Bag-in-box connector assembly according to any one of claims 1-4, further comprising a stop element (18b) at a fixed rotational position with respect to the central axis (13), preventing rotating holder (12) to rotate over more than 360°.

6. Bag-in-box connector assembly according to any one of claims 1-5, further comprising a wall plate (16) positioned co-axial to the central axis.

7. Bag-in-box connector assembly according to claim 6, further comprising a closing plate (18) attached to a top of the wall plate (16).

8. Bag-in-box connector assembly according to claim 7, wherein the closing plate (18) provided with an aperture (18a) for accommodating a handle bearing (12b).

9. Bag-in-box connector assembly according to any one of claims 5-8, wherein the stop element (18b) is attached to the closing plate (18) or the wall plate (16).

10. Bag-in-box connector assembly according to any one of claims 1-9, further comprising an actuating handle (12a) attached to the rotating holder (12).

11. Bag-in-box connector assembly according to claim 1, wherein the rotating holder (12) and the central axis (13) are provided with an assembly having a single rotation direction.

12. Vehicle comprising a frame body (3) for accommodating a beverage preparation assembly (2) and a bag-in-box connector assembly (23) according to any one of claims 1-11,
wherein the bag-in-box connector assembly (23) is positioned inside the frame body (3), the frame body (3) accommodating in operation a plurality of main beverage ingredient packages (6), and
wherein the frame body (3) comprises a closable lid (22; 36) arranged to be closeable in the second position of the rotating holder (12) only.
